Europäisches Patentamt

(19) European Patent Office

Office européen des brevets

(11) Veröffentlichungsnummer: **0 282 541 B1**

(12) # EUROPÄISCHE PATENTSCHRIFT

(45) Veröffentlichungstag der Patentschrift:
14.08.91 Patentblatt 91/33

(51) Int. Cl.⁵: **B64D 11/06, B60N 2/02**

(21) Anmeldenummer: 87906071.3

(22) Anmeldetag: 19.09.87

(86) Internationale Anmeldenummer:
PCT/DE87/00424

(87) Internationale Veröffentlichungsnummer:
WO 88/01967 24.03.88 Gazette 88/07

(54) SCHWENKBARER SITZ, INSBESONDERE FÜR EINEN FLUGBEGLEITER.

(30) Priorität: 19.09.86 DE 3631726
23.09.86 DE 3632288

(43) Veröffentlichungstag der Anmeldung:
21.09.88 Patentblatt 88/38

(45) Bekanntmachung des Hinweises auf die
Patenterteilung:
14.08.91 Patentblatt 91/33

(84) Benannte Vertragsstaaten:
FR

(56) Entgegenhaltungen:
EP-A- 0 170 166
FR-A- 804 010
FR-A- 836 777
FR-A- 2 113 542
FR-A- 2 306 659
US-A- 4 460 215

(73) Patentinhaber: Deutsche Airbus GmbH
Kreetslag 10
W-2103 Hamburg 93 (DE)

(72) Erfinder: BAYMAK, Faruk
Ostermeyerstrasse 18
W-2000 Hamburg 52 (DE)
Erfinder: LASCH, Klaus
Im Ring 29
W-2160 Stade (DE)
Erfinder: STÜBEN, Helmut
Minneweg 20
W-2162 Grünendeich (DE)
Erfinder: ZESTERMANN, Hanno
Liebermannstrasse 43
W-2000 Hamburg 52 (DE)

## Beschreibung

Die Erfindung bezieht sich auf einen Sitz nach dem Oberbegriff des Anspruchs 1.

Der EP-A-0170116 ist ein Sitz dieser Art entnehmbar. Dieser besteht aus einer aufrechten Rückenlehne mit einem daran schwenkbar angelenkten Sitzteil, um dieses zwischen einer annähernd horizontalen Gebrauchslage und einer annähernd vertikalen Ruhelage zu schwenken, wobei seitlich an der Rückenlehne mit einer Flugzeugwand verbundene Gelenke angeordnet sind, um die Rückenlehne mit dem Sitzteil aus einer nahe der Flugzeugwand befindlichen Ruhelage in eine von der Flugzeugwand abstehende Gebrauchslage zu schwenken, wobei das Sitzteil einen seitlichen Ansatz aufweist, der sich in der Gebrauchslage des Sitzteils auf ein Auflager abstützt und Federn vorgesehen sind, wodurch das Sitzteil und die Rückenlehne in ihre Ruhelagen geschwenkt werden. Der Sitz kann in der Ruhelage außer durch die Federn zusätzlich durch Reibung gehalten werden.

Dieser in seiner Ruhelage nur durch Federn und Reibung gehaltene Sitz bietet keinen ausreichenden Schutz vor Personenschäden, die möglicherweise bei einem Unfallgeschehen oder infolge atmosphärischer Turbulenzen eintreten können. So wäre es möglich, daß der Sitz bei einer Not-Evakuierung eines Flugzeugs unter Panik-Bedingungen von einer Halt suchenden Person aus seiner Ruheposition herausgeklappt würde, wodurch dann der Fluchtweg für die nachfolgenden Personen eingeengt oder versperrt wäre. Durch atmosphärische Turbulenzen werden Flugzeuge sehr hohen Beschleunigungen ausgesetzt. Es ist denkbar, daß dabei der lediglich durch Federkraft und Reibung gesicherte Sitz ohne menschliche Einwirkung aus seiner Ruhelage heraustritt. Einschlägige Vorschriften fordern, daß ein mit einer Person belasteter Flugzeugsitz in einem Crash einer Beschleunigung von 9 g standhält ohne zu Bruch zu gehen, wobei plastische Verformungen toleriert werden. Für schwenkbare Sitze wird weiterhin gefordert, daß die Schwenkfunktion nach einem Crash voll erhalten bleibt, so daß eine vollständige Rückkehr in die Ruhelage sichergestellt ist.

Demgemäß liegt der Erfindung die Aufgabe zugrunde, einen gattungsgemäßen Sitz derart auszubilden, daß dieser Mittel aufweist, wodurch das Sitzteil und die Rückenlehne sowohl in ihrer Ruhelage als auch in ihrer Gebrauchslage verriegelbar sind und die Verriegelungen nach einem Crash noch voll funktionsfähig sind.

Diese Aufgabe wird bei einem gattungsgemäßen Sitz durch die kennzeichnenden Merkmale des Patentanspruchs 1 gelöst. Diese Lösung besteht im Prinzip darin, daß entsprechende Verriegelungselemente vorgesehen sind, wobei die tragenden Teile des Sitzes in an sich bekannter Weise als Integral-Frästeile ausgebildet sind.

Durch die Verwendung von Frästeilen wird erreicht, daß die betreffenden Teile trotz geringen Gewichtes so steif sind, daß zwischen den zum Verriegeln in Eingriff zu bringenden Elementen nach einem Crash kein schädlicher Versatz auftritt.

Dabei ist insbesondere von Vorteil, daß der Sitz ein erheblich reduziertes Unfallrisiko aufweist.

Der vorgeschlagene Sitz ist gegenüber bisherigen Sitzen mit geringeren Kosten herstellbar und ist von niedrigerem Gewicht. Um den Sitz bei Nicht-Benutzung aus der Gebrauchslage in eine Mulde einzuschwenken, braucht nur die Verriegelung des Sitzteils gelöst zu werden. Hierdurch klappt das Sitzteil von selbst in seine vertikale Ruhelage und nach Wegfall der Abstützung über das Sitzteil kann eine Feder den Sitz in die Mulde einschwenken. Dabei erfolgt die Verriegelung in der eingeschwenkten Position automatisch.

Außer der von Einschwenk-Sitzen her bekannten vorteilhaften Wirkung in ungünstigen Platzverhältnissen weist der vorgeschlagene Sitz den weiteren Vorteil auf, daß Fehlfunktionen, wie bei Sitzen mit manuellem Einschwenken, nicht auftreten können.

Die Erfindung ist anhand der Zeichnung dargestellt und in der Beispielbeschreibung näher erläutert. Es zeigen

Fig. 1    eine Ansicht eines gebrauchsbereiten Sitzes,
Fig. 2    einen in eine Mulde eingeschwenkten Sitz,
Fig. 3    die Ansicht A nach Fig. 1
Fig. 4    die Ansicht B nach Fig. 1,
Fig. 5    den Schnitt V-V nach Fig. 3,
Fig. 6    den Schnitt VI-VI nach Fig. 3,
Fig. 7    die Lagerung eines Verriegelungshebels,
Fig. 8    den Schnitt VIII-VIII nach Fig. 4,
Fig. 9    einen Gurt-Aufrollautomaten,
Fig. 10    ein Verriegelungsschloß,
Fig. 11    eine Anschlagschleife,
Fig. 12    die gedrehte Ansicht XII-XII nach Fig. 7,
Fig. 13    das Tragteil für die Rückenlehne,
Fig. 14    den Schnitt XIV nach Fig. 13

Fig. 15      das Tragteil für die Sitzfläche und

Fig. 16      die Ansicht XVI nach Fig. 15.

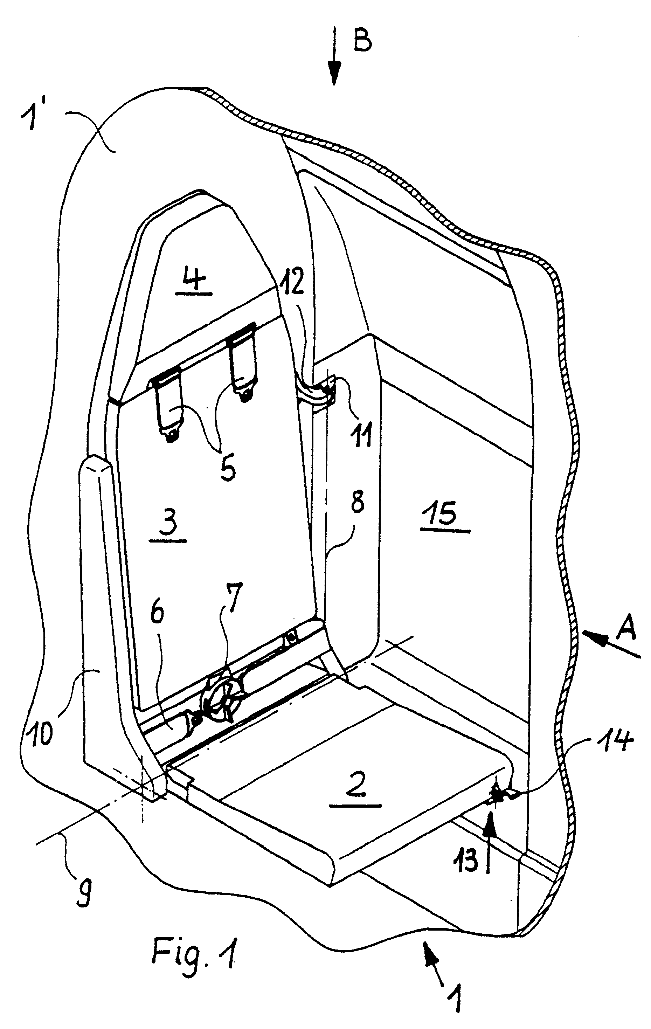

Figur 1 zeigt einen Sitz 1, bestehend aus einem Sitzteil 2, einer Rückenlehne 3 einer Kopfstütze 4 und einem Gurtsystem, bestehend aus zwei Schultergurten 5, einem zweiteiligen Beckengurt 6 mit einem Zentralschloß 7, das auch die Enden der Schultergurte 5 aufnimmt. Beidseitig der Rückenlehne 3 befinden sich zwei Seitenholme, wovon der hier nur sichtbare linke mit 10 bezeichnet ist. Das Sitzteil 2 ist innerhalb der Seitenholme um eine annähernd waagerechte Achse 9 klappbar gelagert. Die Rückenlehne 3 mit dem Sitzteil 2 ist ihrerseits um eine annähernd senkrechte Achse 8 schwenkbar ausgebildet. Hierzu sind zwei Gelenkverbindungen vorgesehen, wovon die obere im Bild sichtbar ist. Dieses obere Gelenk besteht aus einem mit der Flugzeugstruktur verbundenen Beschlag 11 und einem sitzseitigen Beschlag 12. In seiner gezeigten gebrauchsfertigen Position ist der Sitz 1 in drei Punkten mit der Flugzeugstruktur verbunden, nämlich in den vorgenannten Gelenken und in einem Auflagerpunkt, der sich unter der gemäß der Figur rechten Ecke des Sitzteils 2 befindet. Hier ist das Sitzteil 2 mit der Flugzeugstruktur 1' durch ein mittels eines Hebels 14 betätigbares Verriegelungsschloß 13 lösbar verbunden. Wird der Sitz 1 nicht benötigt, kann er durch Drehung um die Achse 8 in eine Mulde 15 eingeschwenkt werden. Hierzu wird zunächst die Verriegelung anhand des Hebels 14 gelöst, so daß das Sitzteil 2 durch Federkraft in die vertikale Stauposition geklappt wird. Danach wird der gesamte Sitz 1 in die Mulde 15 einschwenkt. Ist der Sitz 1 voll eingeschwenkt, rastet automatisch eine weitere Verriegelung ein, wodurch der Sitz 1 in seiner Stauposition fixiert ist.

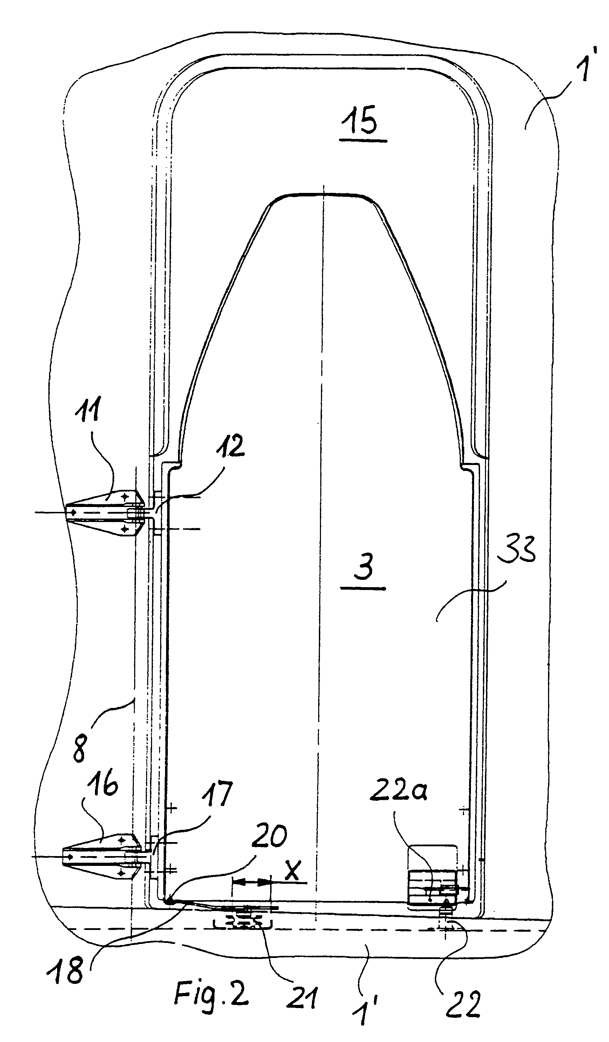

Figur 2 zeigt den Sitz 1 in eingeschwenkter Position, wobei die Rückseite der Rückenlehne 3 mit der Abdeckung 33 sowie die Mulde 15 sichtbar sind. Das Bild zeigt weiterhin die Achse 8 mit dem oberen Gelenk, bestehend aus den Beschlägen 11 und 12 sowie dem unteren Gelenk, bestehend aus den Beschlägen 16 und 17. Die Figur zeigt weiterhin eine an der Rückenlehne 3 in einem Punkt 20 an ihrem einen Ende angelenkte Anschlagschleife 18, deren anderes Ende ein Langloch von der Länge x aufweist. Seitens der Struktur 1' ist ein Bolzen 21 angeordnet, der in das Langloch eingreift und so zur Führung der Schleiie 18 dient. Der Schwenkwinkel des Sitzes 1 ist durch die Länge x des Langloches definiert. An der Struktur 1' ist weiterhin ein zur Fixierung des Sitzes 1 in beiden Positionen dienender Kegelstift 22 angeordnet. Zur Fixierung des Sitzes 1 in der eingeschwenkten Position wirkt der Kegelstift 22 mit einem Verriegelungshebel 22a zusammen. Zum Entriegeln aus dieser Position wird der Hebel 22a nach oben gedrückt, wodurch die Verriegelung gelöst wird und der Sitz 1 aus der Mulde 15 geschwenkt werden kann.

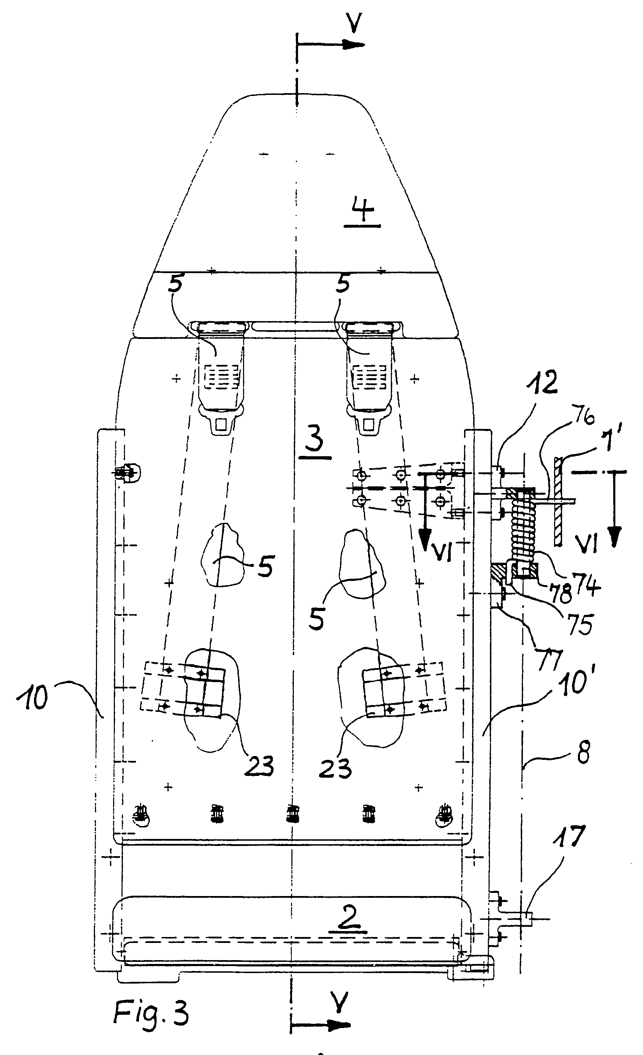

Figur 3 zeigt die Ansicht A nach Figur 1 ohne die umgebende Struktur 1' mit der Rückenlehne 3, dem herausgeklappten Sitzteil 2, der Kopfstütze 4, den Seitenholmen 10 und 10' den beiden Schultergurten 5 sowie den Beschlägen 12 und 17. Durch die gestrichelte Darstellung ist der Verlauf der unsichtbaren Teile der Schultergurte 5 gezeigt. die mit je einem Gurtaufrollautomaten 23 in Verbindung stehen. Zum Einschwenken des Sitzes in die Mulde 15 ist eine Schenkelfeder 74 vorgesehen, deren Schenkel 75 sich gegen den Beschlag 77 abstützt und dessen Schenkel 78 an der Struktur 1' anliegt. Dabei ist die Feder 74 durch den Lagerbolzen 78 geführt.

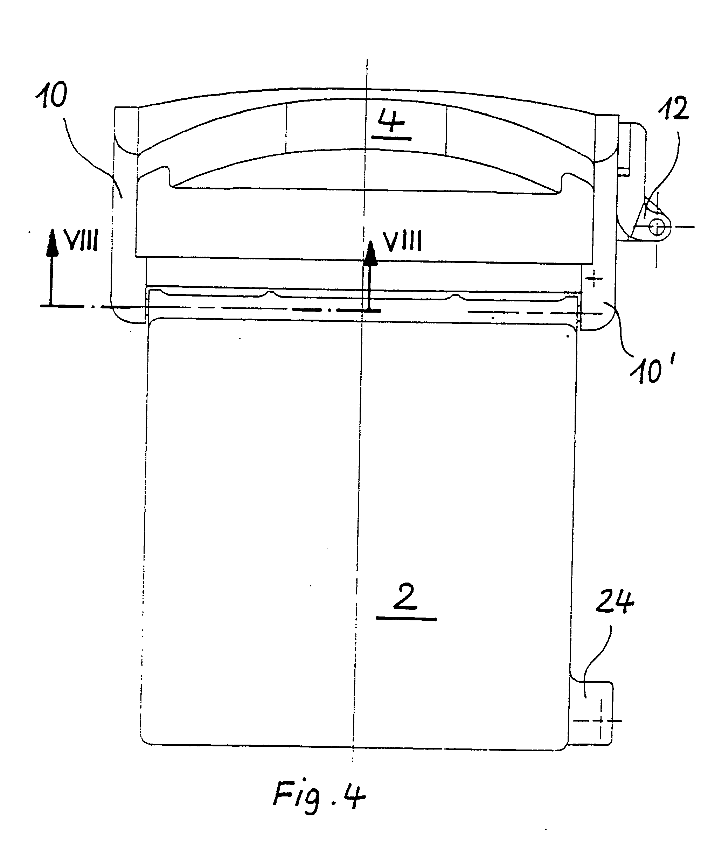

Figur 4 zeigt die Ansicht B nach Figur 1, worin im wesentlichen die Draufsicht des Sitzteils 2 mit den Seitenholmen 10, 10', der Kopfstütze 4 und dem Beschlag 12 erscheint. Mit der tragenden Platte des Sitzteils 2 ist ein Ansatz 24 integriert, der zur Aufnahme des Verriegelungsschlosses 13 mit dem Hebel 14 dient.

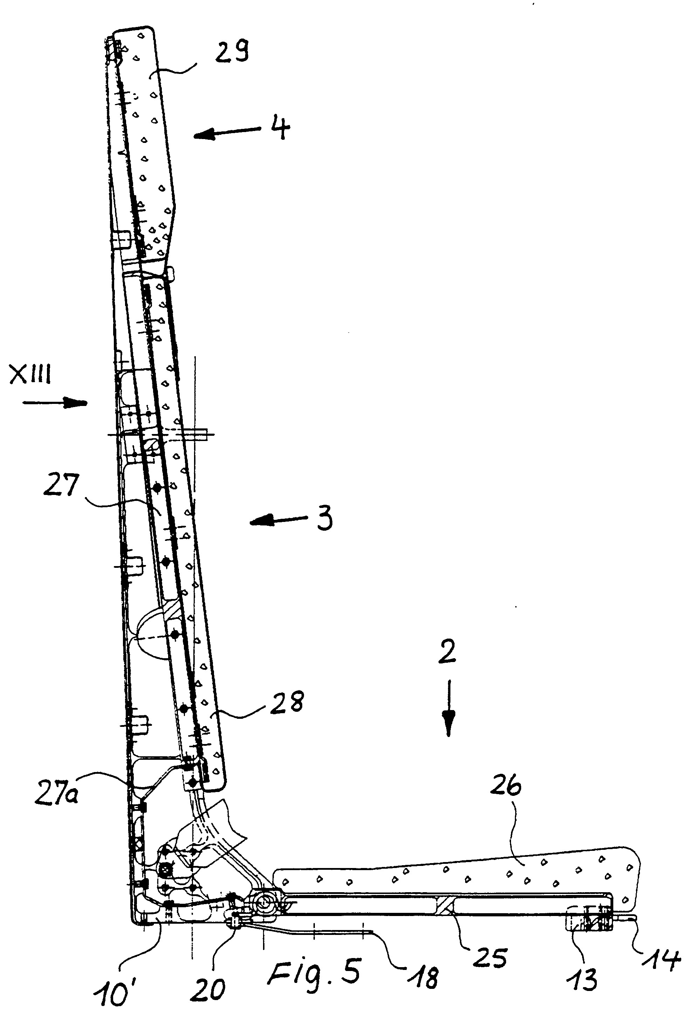

Figur 5 zeigt den Schnitt V-V nach Figur 3 mit dem Sitzteil 2, der Rückenlehne 3 und der Kopfstütze 4. In diesem Schnitt sind die Einzelelemente der genannten Bauteile sichtbar. So besteht das Sitzteil 2 im wesentlichen aus einer Sitzplatte 25 und einem Sitzpolster 26. Die Rückenlehne 3 und die Kopfstütze 4 sind durch eine gemeinsame Tragplatte 27 zu einer Baugruppe zusammengefaßt, wobei das Rückenpolster mit 28 und das Kopfpolster mit 29 bezeichnet ist. Die genannten Polster 26, 28, 29 sind aus einem geeigneten Schaumstoff hergestellt. An der Sitzplatte 25 ist das Verriegelungsschloß 13 mit dem Hebel 14 angebracht. Die Platten 25 und 27 sind als aus einer geeigneten Leichtmetall-Legierung bestehende Frästeile ausgebildet. In gleich vorteilhafter Weise sind auch die Seitenholme 10, 10' ausgeführt. Eine Gurtschale 27a ist als Blechteil ausgebildet und sowohl mit der Unterkante der Rückenplatte 27 als auch mit den Seitenholmen 10 verschraubt.

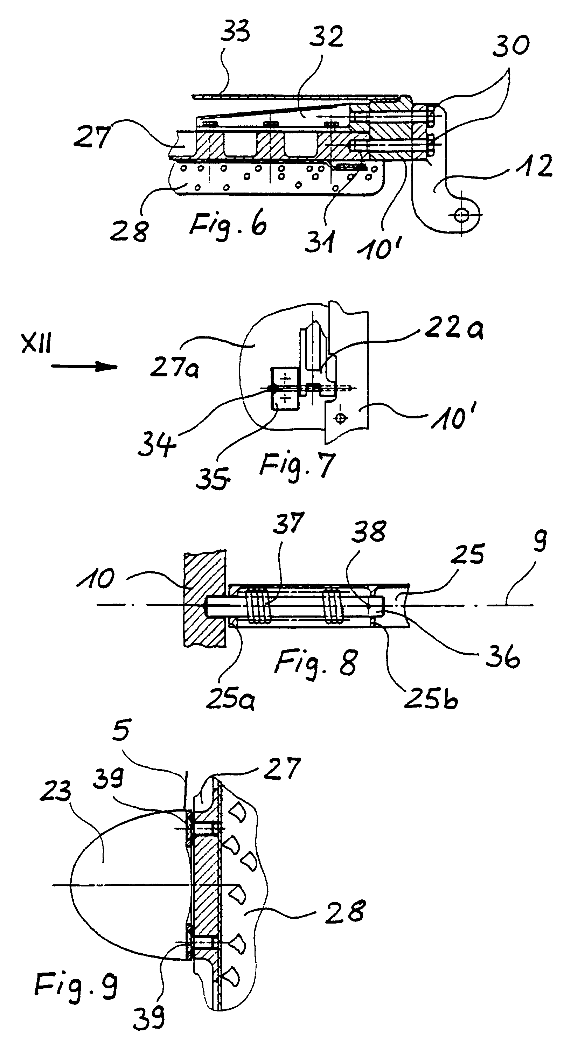

Figur 6 zeigt im Schnitt die Befestigung des Beschlages 12 an der Rückenlehne 3. Hierzu sind vier Schrauben 30 vorgesehen, wovon die beiden oberen sichtbar sind. Die Schrauben 30 sind durch entsprechende Durchgangsbohrungen des Seitenholmes 10' geführt und mit der Rückenplatte 27 sowie mit einem Beschlag 32 verschraubt, die entsprechende Innengewinde 31 aufweisen. Die Figur zeigt weiterhin das Rückenpolster 28 sowie eine Abdeckung 33.

Figur 7 zeigt die Lagerung des Verriegelungshebels 22a, bestehend aus einem in den Seitenholm 10' eingesetzten Stift 34, der mittels eines mit der Gurtschale 27a verschraubten Beschlages 35 abgestützt ist.

Figur 8 zeigt anhand eines Schnittes Einzelheiten der Lagerung des Sitzteils 2 um die Achse 9 mit einem Zapfen 36, der seitens der Sitzplatte 25 in der Wandung 25a und einer Rippe 25b ruht und innerhalb des Seitenholmes 10 in eine entsprechende Bohrung eingeschoben ist. An der gegenüberliegenden Seite der Platte 25 ist eine entsprechende Anordnung vorgesehen. Das Moment zum Hochklappen des Sitzteis 2 wird durch zwei Schenkelfedern 37 aufgebracht, deren eine hier gezeigt ist. Der eine Schenkel der Feder 37 greift an einer hier nicht sichtbar en Rippe der Platte 25 an, wohingegen der andere Schenkel an einem hier nicht sichtbaren an der Gurtschale 27a befindlichen Anschlag anliegt. Der Zapfen 36 ist nach seiner Montage durch einen in eine Bohrung 38 eingesetzten Splint gesichert.

Figur 9 zeigt im Schnitt eine Einzelheit der das Polster 28 aufweisenden Rückenplatte 27 mit einem der beiden Gurtaufrollautomaten 23 für einen Schultergurt 5. Der Automat 23 ist an der Platte 27 durch Schrauben 39 befestigt. Die betreffende Stelle der Platte 27 ist zur Aufnahme der möglicherweise auftretenden Gurtkräfte verstärkt.

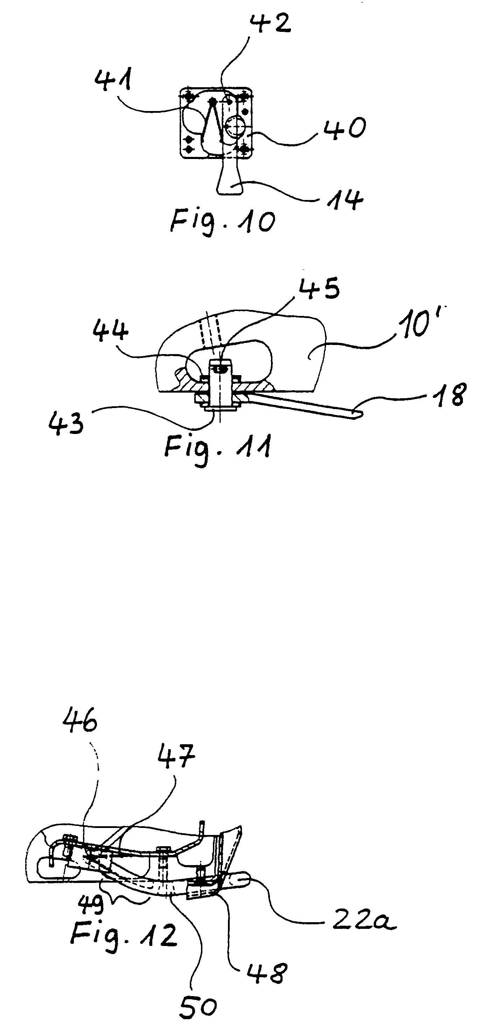

Figur 10 zeigt das mit dem Kegelstift 22 zusammenwirkende Verriegelungsschloß 13, das im wesentlichen aus dem genannten Verriegelungshebel 14, einem Gehäuse 40 und einer Schenkelfeder 41 besteht, die auf den Hebel 14 ein um den Drehpunkt 42 im Bild linksdrehendes Moment ausübt. Das Schloß 13 ist zusammen mit dem Kegelstift 22 dargestellt. Dieser weist an der Berührungsstelle mit dem Hebel 14 einen Schlitz von der Dicke des Hebels 14 derart auf, daß vom Stift 14 noch etwa der halbe schraffiert dargestellte Querschnitt stehenbleibt. Zur Fixierung des Sitzes 1 in der Gebrauchsposition ist das Sitzteil 2 einfach nach unten zu klappen. Dabei setzt der Hebel 14 auf der Kegelfläche des Kegelstiftes 22 auf und gleitet an diesem entlang bis der Hebel 14 in den besagten Schlitz einrastet. Jetzt ist das Sitzteil 2 mit der Struktur 1' fest verbunden und kann nur dadurch wieder gelöst werden, daß der Hebel 14 von Hand aus dem Schlitz herausgeschwenkt wird.

Figur 11 zeigt die Befestigung der Anschlagschleife 18 am Seitenholme 10'. Hierzu ist ein Bolzen 43 mit einer Scheibe 44 vorgesehen, der mit einem Splint 45 gesichert ist.

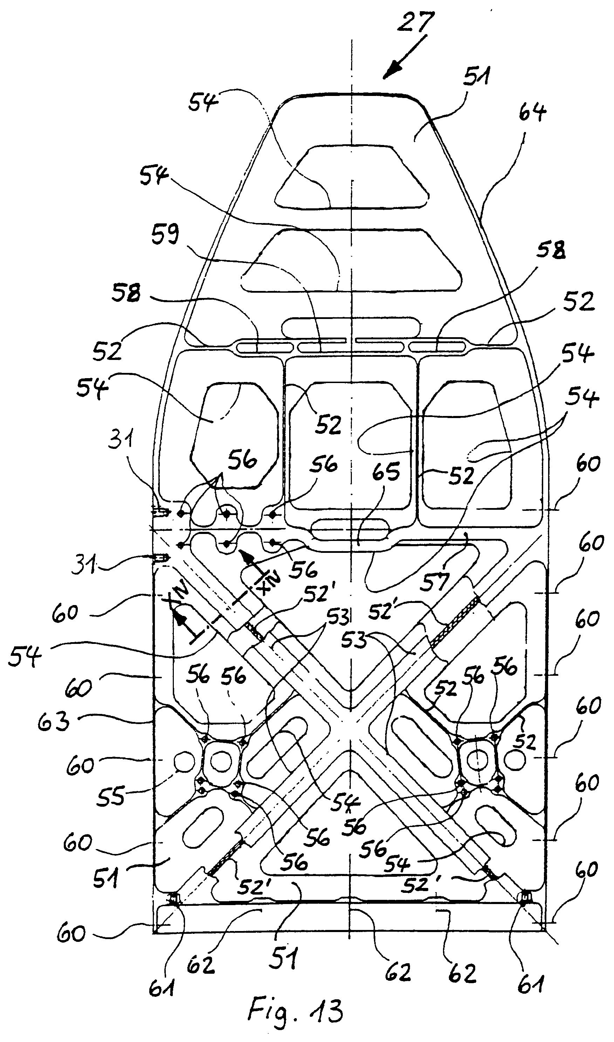

Figur 12 zeigt den Verriegelungshebel 22a in einer Seitenansicht mit dem Drenpunkt 46. Der Hebel 22a ragt durch eine in einer Mulde befindliche Öffnung. Eine Schenkelfeder 47 erteilt dem einen bogenförmigen Bereich 49 aufweisenden Hebel 22a ein im Bild rechtsdrehendes Moment, wodurch sich dieser an einen Anschlag 48 anlegt. An seiner tiefsten Stelle weist der Hebel 22a eine Kegelbohrung 50 auf. Beim Einschwenken des Sitzes 1 nähert sich der Hebel 22a dem Kegelstift 22 und berührt diesen mit seinem bogenförmigen Teil, wobei der Hebel 22a anschließend nach oben ausweicht, bis die Stelle der Kegelbohrung 50 den Stift 22 erreicht hat. In dieser Position springt der Hebel 22a wieder nach unten, wodurch der Stift 22 in die Kegelbohrung eintritt. Damit ist der Sitz 1 in seiner eingeschwenkten Position fixiert.

Figur 13 zeigt die als frästeil ausgebildete Tragplatte 27 in der Ansicht XIII gemäß Fig. 5. Die Herstellung hochfester Leichtbauteile durch Fräsen ist in der Luftfahrtindustrie üblich, wobei der Vorteil genutzt wird, daß die betreffenden Teile optimal an die vorliegenden Belastungen angepaßt werden können. Übliche Bauteile dieser Art weisen im Prinzip immer eine offene oder geschlossene fräshaut auf, die durch Rippen in geeigneter Weise versteift ist. Dabei kann man sich eine derartige fräskonstruktion als Weiterbildung einer Blechkonstruktion vorstellen, wobei die einzelnen Elemente des Bauteils, wie die Haut und die Rippen, aus Blech Hergestellt und durch Vernieten miteinander verbunden sind. Nun ist die fräskonstruktion gegenüber der Blechkonstrurktion insofern von Vorteil, als hierbei Nietüberlappungen und die punktförmigen Kraftübertragungen im Bereich der einzelnen Niete entfallen. Da die Rippen mit der Haut einstückig zu einem Teil integriert sind, werden derartige Frästeile auch Integralbauteile, Integralteile oder Integralplatten genannt. Ein fertiges Frästeil dieser Art enthält nur noch rund 10% des ursprünglich vorhandenen Materials und galt bisher im Vergleich mit auf andere Weise hergestellten Teilen wegen des erfoderlichen maschinellen Aufwandes als recht teuer.

Erst seitdem eine größere Anzahl gleicher Frästeile in einem numerisch gesteuerten Fräsvorgang gleichzeitig hergestellt werden kann, ist das Fräsen bezüglich der Herstellkosten mit dem Gießen bzw. Druckgießen konkurrenzfähig.

Die gezeigte Tragplatte 27 besteht aus einer Fräshaut 51, mit Versteifungsrippen 52. Dabei weisen die im unteren Bereich 63 für die Rückenlehne diagonal gekreuzten Rippen 52' erfindungsgemäße Obergurte 53 auf. Hierdurch erhalten die auf der Haut 51 stehenden Rippen 52' einen T-förmigen Querschnitt. Ein anderer mit 57 bezeichneter Obergurt ist einseitig an die betreffende Rippe integriert, so daß der Querschnitt dieser Rippe eine umgekehrte L-Form aufweist. Durch den oberen Bereich 64 der Integralplatte 27 wird später das integrierte Kopfteil des Sitzes gebildet. Hier sind Führungselemente 58 und eine Gurtumlenkung 59 integriert. Die Elemente 58 werden bei Anordnung von Gurtaufrollautomaten benutzt, wohingegen die Umlenkung 59 für fest montierte Schultergurte vorgesehen ist, deren feste Enden durch einen integrierten Bügel 65 gehalten werden. Damit sind die Möglichkeiten einer Fräskonstruktion genutzt um Elemente in die Platte 27 einstückig zu integrieren, die bisher als getrennte Bauteile hergestellt und montiert wurden. Als Vorkehrung zur Befestigung der Gurtaufrollautomaten sowie zur Befestigung von Trägern sind Gewindeeinsatzbohrungen 56 vorgesehen. Aufgrund von Bohrungen 60 kann die Platte 27 mit den Seitenholmen 10, 10' verschraubt werden. Die Gewindebohrungen 61 und die Durchgangsbohrungen 62 dienen zur Befestigung der Gurtschale. Zur Gewichtserleichterung sind Aussparungen 54 und Bohrungen 55 vorgesehen. Wie Fig. 5 zeigt, ist die Platte 27 derart eingebaut, daß die Fräshaut 51 den Polstern zugewandt ist. Den hinteren Abschluß der Platte 27 bilden die Gurte 53 und 57 der Rippen 52 und 52'. Ein wesentliches Merkmal dieser Platte besteht darin, daß diese außer den Versteifungsrippen alle weiterhin erforderlichen Elemente bzw. Vorkehrungen zur Montage der Platte selbst sowie zur Montage aller weiteren mit der Platte im Zusammenhang stehenden Bauteile aufweist.

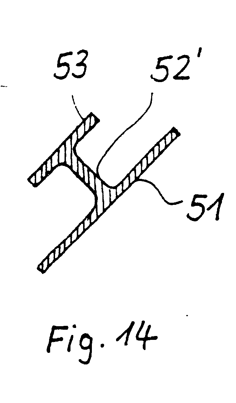

Figur 14 zeigt einen Schnitt durch eine Rippe 52' nach Fig. 13. Hier erscheint der T-förmige Querschnitt dieser Rippe, der sich durch Integration des Gurtes 53 ergibt. Hier bildet das Frästeil quasi einen Doppel-T-Träger mit der Fräshaut 51 als unterem Gurt, der Rippe 52' als Steg und dem oberen Gurt 53.

Figur 15 zeigt die gefräste Sitzplatte 25. Auch hier sind die Rippen 52 mit Gurten 53 versehen und erhalten damit einen T-förmigen Querschnitt. Die Fräshaut 51 sowie die Eckknotenpunkte weisen Bohrungen 55 zur Gewichtserleichterung auf. Die Platte 25 wird durch die tragenden Seiten 66, 67, 68 und 71 begrenzt und ist mit Achsbohrungen 70 versehen, wobei die Haut 69 der Abdeckung der Achsfeder dient. Die Gewindebohrungen 72 sowie die Stiftbohrungen 73 auf dem Ansatz 24 sind für die Befestigung des Verriegelungsschlosses 13 vorgesehen, wobei der Ansatz 24 auf die vorbeschriebene Weise mit der Platte 25 integriert ist.

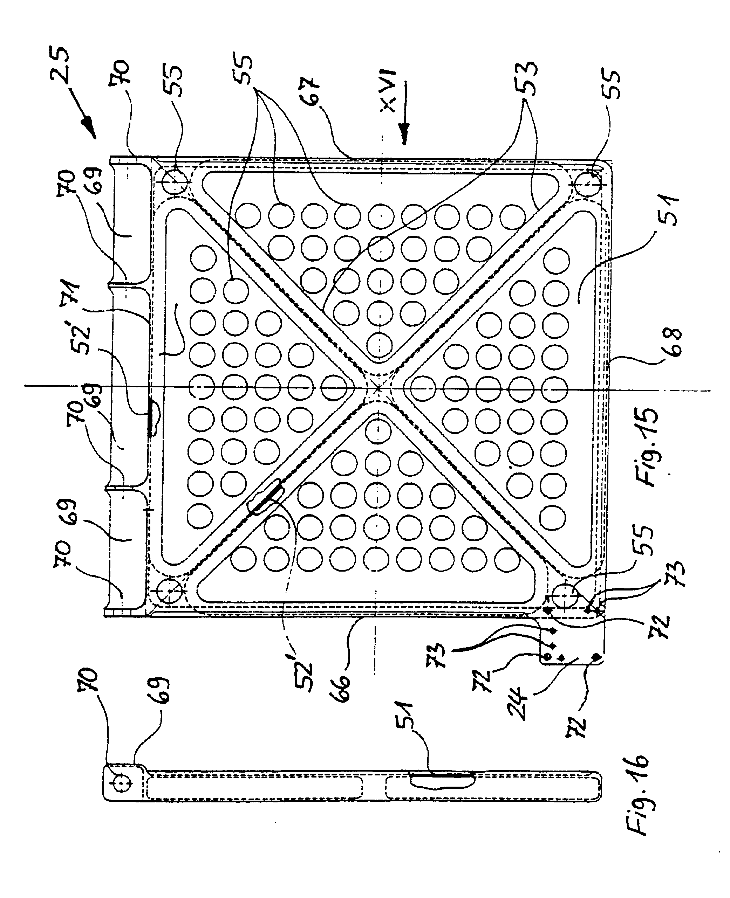

Figur 16 zeigt die Ansicht XVI nach Fig. 14. Hieraus gehen die Dicke d der Platte 25 sowie die Lage der Bohrungen 70 und der Haut 69 hervor.

Infolge der Ausbildung insbesondere der Sitzplatte 25 und der Rückenplatte 27 als Integralbauteile sind hier die Möglichkeiten des Fräsverfahrens genutzt, um alle aus Festigkeitsgründen erforderlichen Elemente wie Haut, Rippen, Randträger, sowie alle zur Montage erforderlichen Elemente wie Gewindebohrungen, Durchgangsbohrungen, Ansätzte u.s.w. einstückig in die betreffenden Bauteile einzufügen.

**Patentansprüche**

1. Schwenkbarer Sitz für ein Flugzeug, insbesondere für einen Flugbegleiter, bestehend aus einer aufrechten Rückenlehne mit einem daran schwenkbar angelenkten Sitzteil, um dieses zwischen einer annähernd horizontalen Gebrauchslage und einer annähernd vertikalen Ruhelage zu schwenken, wobei seitlich an der Rückenlehne mit einer Flugzeugwand verbundene Gelenke angeordnet sind, um die Rückenlehne mit dem Sitzteil aus einer nahe der Flugzeugwand befindlichen Ruhelage in eine von der Flugzeugwand abstehende Gebrauchslage zu schwenken und das Sitzteil einen seitlichen Ansatz aufweist, der sich in der Gebrauchslage des Sitzteils auf ein Auflager abstützt und Federn vorgesehen sind, wodurch das Sitzteil und die Rückenlehne in ihre Ruhelagen geschwenkt werden, dadurch **gekennzeichnet**, daß an der Struktur zur Verriegelung des Sitzes ein Kegelstift (22) angeordnet ist, der sowohl mit einem an der Unterkante der Rückenlehne (3) angeordneten Verriegelungshebel (22a) mit einer Kegelbohrung (50) zur Verriegelung des Sitzes in seiner Ruhelage als auch mit einem am Sitzteil (2) angeordneten Verriegelungsschloß (13) zur Verriegelung des Sitzes in seiner Gebrauchslage zusammenwirkt, wobei die tragenden Teile des Sitzteils (2) und der Rückenlehne (3) (Sitzplatte 25, Tragplatte 27) in an sich bekannter Weise als Integral-Frästeile ausgebildet sind.

2. Sitz nach Anspruch 1, dadurch **gekennzeichnet**, daß die Seitenholme (10) des Sitzes als Frästeile ausgebildet sind.

3. Sitz nach Anspruch 1 oder 2, dadurch **gekennzeichnet**, daß das Tragteil (27) außer den Versteifungsrippen alle weiteren erforderlichen Elemente bzw. Vorkehrungen zur Montage des Tragteils (27) selbst sowie zur Montage aller weiteren mit dem Tragteil (27) im Zusammenhang stehenden Bauteile aufweist, wie das Kopfpolster (29), die Gurtaufrollautomaten (23) und dergleichen.

4. Sitz nach einem der Ansprüche 1 bis 3, dadurch **gekennzeichnet**, daß die Rippen (52, 52') der tragenden Frästeile (10, 25, 27) Obergurte (53) aufweisen, wodurch die Rippen (52, 52') einen T-Querschnitt erhalten.

5. Sitz nach einem der Ansprüche 1 bis 4, dadurch **gekennzeichnet**, daß die Rippen (52, 52') der tragenden Frästeile (10, 25, 27) einseitig angefräste Obergurte (57) aufweisen, wodurch die Rippen (52, 52') einen L-Querschnitt erhalten.

**Claims**

1. A swivelling seat for an aircraft comprising an upright back-rest and a seat portion which is hinged thereto so as to be capable of swinging between a substantially horizontal position of use and a substantially vertical rest position, the back-rest also having laterally arranged hinges which are connected to an aircraft wall in order to swivel the back-rest, together with the seat portion, out of a rest position which is close to the aircraft wall, into a position of use protruding from the aircraft wall and the seat portion having a lateral extension which is supported in the position of use of the seat portion on a support, spring means being provided for swivelling the seat portion and the back-rest into their rest positions, characterised in that a tapered pin is provided for locking the seat by collaborating respectively with a locking lever, arranged on the lower edge of the back-rest, having a taper bore, for locking the seat in its rest position, and with a latching lock arranged on the seat portion for locking the seat in its position of use, and in that load-bearing parts of the seat portion and of the back-rest, namely a seat plate and a back-rest bearing plate are formed as integral milled parts.

2. A seat as claimed in claim 1 having side members which are also formed as milled parts.

3. A seat as claimed in claim 1 or 2 wherein the back rest bearing plate is formed with integral stiffening ribs and all further necessary means and/or elements for the fitting of the bearing plate itself as well as for the fitting of all further components connected with the bearing plate, such as a head pad, and automatic strap winding mechanisms.

4. A seat as claimed in any preceding claim wherein the load-bearing milled parts have integral ribs provided with upper chords, and thus a T-cross-section.

5. A seat as claimed in any preceding claim wherein the load-bearing milled parts have integral ribs provided with upper chords which are milled-on on one side only and have, thus, an L-cross-section.

## Revendications

1. Siège pivotant pour un avion, notamment pour un membre de l'équipage comprenant un dossier vertical avec un siège pivotable articulé sur lui, pouvant basculer entre une position d'utilisation presque horizontale et une position de repos presque verticale, ayant latéralement des articulations fixées sur le dossier et reliées à une paroi de l'avion, pour pouvoir basculer le dossier avec le siège d'une position de repos se trouvant à proximité de la paroi de l'avion en une position d'utilisation se détachant de la paroi et le siège présente un rebord latéral qui vient en contact dans la position d'utilisation avec un appui, et en outre des ressorts sont prévus pour permettre de basculer le siège et le dossier dans leur position de repos, caractérisé en ce qu'on dispose une tige conique (22) pour verrouiller le siège, qui coopère aussi bien avec un levier de verrouillage (22a) disposé sur le bord inférieur du dossier (3) et avec un trou conique (50) pour verrouiller le siège dans sa position de repos ainsi qu'avec une serrure de verrouillage (13) disposée sur le siège (2) pour verrouiller le siège dans sa position de service, les pièces portantes du siège (2) et du dossier (3) (plaque du siège 25 et plaque portante 27) étant réalisées de manière connue sous forme de pièces fraisées intégrées.

2. Siège selon la revendication 1, caractérisé en ce qu'on réalise les longerons latéraux (10) du siège sous forme de pièces fraisées.

3. Siège selon la revendication 1 ou 2, caractérisé en ce que la pièce portante (27), entre les nervures de renfort, présente tous les autres éléments ou pièces en attente pour monter la pièce portante (27) elle-même ainsi que pour monter toutes les autres pièces constitutives se trouvant en relation avec la pièce portante (27), tel que l'appui tête (29), le mécanisme d'enroulement automatique de la ceinture (23) et analogues.

4. Siège selon l'une des revendications 1 à 3, caractérisé en ce que les nervures (52, 52') des pièces fraisées portantes (10, 25, 27) présentent des semelles supérieures (53), grâce auxquelles les nervures (52, 52') ont une section en T.

5. Siège selon l'une des revendications 1 à 4, caractérisé en ce que les nervures (52, 52') des pièces fraisées portantes (10, 25, 27) possèdent une semelle supérieure fraisée (57) d'un seul côté, ce qui donne aux nervures (52, 52') une section en L.

Fig. 1

Fig.2

Fig. 3

10

Fig.4

Fig. 5

Fig. 6

Fig. 7

Fig. 8

Fig. 9

Fig. 10

Fig. 11

Fig. 12

Fig. 13

53    52'

51

Fig. 14

Fig. 16

Fig. 15

EP 0 282 541 B1